# EUROPÄISCHE PATENTANMELDUNG

(11) **EP 3 450 667 A1**
(43) Veröffentlichungstag der Anmeldung: **06.03.2019**
(21) Anmeldenummer: 18192587.6
(22) Anmeldetag: 04.09.2018
(51) Int. Cl.: E05D 15/06, F16C 29/06, E06B 3/46

(54) **SCHIEBETÜRENSYSTEM**

(30) Priorität: 04.09.2017 CH 10972017
(71) Anmelder: Elkuch Bator AG, 3360 Herzogenbuchsee (CH)
(72) Erfinder: Elkuch, Nicolas, 9487 Bendern (LI)
(74) Vertreter: Riederer Hasler & Partner Patentanwälte AG

(57) **Zusammenfassung**

Die Erfindung betrifft ein Schiebetürensystem (11) für Strassen- und Eisenbahntunnel, mit einer oberen (41) und einer unteren Führungsschiene, wenigstens einem entlang der oberen Führungsschiene (41) verschiebbaren Wagen (17), und einem am Wagen (17) angeordneten Türflügel (19), wobei zwischen dem Wagen (17) und der oberen Führungsschiene (41) eine Wälzführung vorgesehen ist.

## Beschreibung

Die Erfindung betrifft ein Schiebetürensystem gemäss Oberbegriff des Anspruchs 1.

### Stand der Technik

Schiebetüren gibt es je nach Einsatzbereich in den verschiedensten Ausführungen. Die EP-A-1 477 361 offenbart beispielsweise eine automatische Schiebetüre mit einem oder zwei Türflügeln, die entlang einer Führungsschiene verschiebbar sind. In der Öffnungsstellung werden die Türflügel seitlich in eine Wand verschoben und in der Schliessstellung stossen diese stirnseitig aneinander. Für die horizontale Verschiebbarkeit ist den Türflügeln jeweils ein Antrieb, üblicherweise ein Zahnriemenantrieb, zugeordnet. Die Türflügel sind mittels Rollen auf einer feststehenden Schiene gelagert. Die Schienen sind durch ein U-Profil gebildet, wobei die Rollen zwischen den horizontalen Schenkeln dieses U-Profils verspannt und geführt sind. Eine solche Schiebetüre wird üblicherweise zum Verschliessen von Öffnungen in einem Gebäude verwendet.

Die EP-A-1 544 402 offenbart eine Schiebetür für den Einsatz in Strassen- und Eisenbahntunneln. Diese ist dadurch gekennzeichnet, dass das Türblatt während des Öffnens eine Drehbewegung ausführt, wobei der Drehpunkt des Drehgelenks ortsfest und so angeordnet ist, dass sich bei auf das Türblatt wirkenden Wind- und Druckkräften keine resultierenden Kräfte in Bewegungsrichtung der Tür sondern senkrecht dazu ergeben. Dies wird dadurch realisiert, indem der Drehpunkt des Drehgelenks sich ausserhalb des Türblatts in Wandnähe des Raumes befindet.

Das deutsche Patent DE 595 065 offenbart ein Laufwerk für Schiebetüren, bei dem der Laufwagen zwischen oberen und unteren an der Laufschiene abrollenden Kugeln läuft. Die Kugeln wickeln sich dabei gegenüber der Schiene mit nur einem ihrem Durchmesser entsprechenden Rollkreis ab. Eine Türe kann am Laufwagen über ein Traggestell gelenkig mit dem Laufwagen verbunden sein. Eine untere Führungsschiene ist nicht vorgesehen, weshalb eine solche Schiebetüre sich nicht für den Einsatz in Eisenbahntunneln eignet.

Die DE-OS-1 559 827 beschreibt eine Rollabstützung für hängend geführte Schiebetüren, die eine zwischen einer Laufschiene und einer in der Laufschiene angeordneten Tragschiene vorgesehene Wälzkörperanordnung umfasst, die von zwei dem Längsschlitz der Laufschiene benachbart angeordnete Reihen und einer diesem gegenüberliegenden Reihe eingeordnetenen, zylindrischen Walzen gebildet ist. Diese Wälzkörperanordnung zeichnet sich dadurch aus, dass die Walzen in einem gemeinsamen Käfig eingesetzt sind.

GB 726 173 offenbart eine hängend aufgehängte Schiebetüre, die oben und unten geführt ist. Die obere Führung besteht aus einer an der Wand befestigten Laufschiene und einem entlang der Laufschiene beweglichen Wagen. Der Wagen besteht aus einem kreiszylindrischen Käfig, in welchem eine Mehrzahl von Laufkugeln aufgenommen sind. Der Käfig besitzt unten einen Längsschlitz, in welchen ein senkrecht nach oben ragender Steg der Laufschiene eingreifen und in Kontakt mit den Laufkugeln kommen kann. Bodenseitig ist im Boden eine Längsnut vorgesehen, in welcher das Türblatt senkrecht zur Bewegungsrichtung der Schiebetüre geführt ist. Die beschriebene Schiebetüre hat den Vorteil, dass sie sich ohne Zuhilfenahme von Werkzeugen ein- und aushängen lässt.

Das deutsche Patent DE 103 07 455 B3 offenbart einen Schiebetürbeschlag für eine mindestens einen Schiebeflügel aufweisende Schiebetür. Der Schiebetürbeschlag besteht aus einem oberen Laufprofil und einem identischen oder ähnlichen unteren Laufprofil. Oberes und unteres Laufprofil bilden zusammen eine obere Laufschiene. Zwischen den Laufflächen befinden sich Laufrollen, die mit Führungsflanschen und dessen Seitenbändern untereinander verbunden sind.

Keine der oben erwähnten Entgegenhaltungen verwendet Kugel- oder Rollenumlaufführungen.

In Strassen- und Eisenbahntunneln bestehen ganz besondere Anforderungen an eine Schiebetüre. Zum einen müssen sie allzeit als Fluchtweg in beiden Richtungen nutzbar sein. Dabei dürfen Druckunterschiede, die zwischen dem Haupt- und dem durch die Schiebetüre abgegrenzten Fluchttunnel herrschen, die Flucht nicht behindern. Dies ist bei Schiebetüren grundsätzlich der Fall, da die Drucklasten im Wesentlichen senkrecht auf das Türblatt und nicht gegen die Öffnungsrichtung wirken. Zum anderen müssen die in Tunneln eingesetzten Türen wechselnden Drucklasten standhalten können, die beispielsweise von schnelll vorbeifahrenden Zügen erzeugt werden. In der Praxis hat sich gezeigt, dass diese Art der Beanspruchung in den allermeisten Fällen unterschätzt wird.

### Aufgabe der Erfindung

Aufgabe der vorliegenden Erfindung ist es ein Schiebetürensystem zur Verfügung zu stellen, das unterschiedlichen Drucklasten und -schlägen über längere Zeit standhalten kann. Insbesondere ist es ein Ziel, ein Sicherheitsschiebetürensystem vorzuschlagen, das sich für den Einbau und zum Verschliessen von Fluchtweg-Durchgangsöffnungen in Eisenbahn- und Strassentunneln eignet.

### Beschreibung

Die Erfindung betrifft eine Schiebetüre für Strassen- und Eisenbahntunnel mit einer oberen Führung, insbesondere Linearführung, und einer unteren Führung. Die Führungen erlauben das Verschieben eines Türflügels in einer Schieberichtung. Die obere Führung umfasst eine Lauf- bzw. Führungsschiene und wenigstens einen entlang der Führungsschiene verschiebbaren (Lauf-)Wagen, an dem der Türflügel angeordnet ist.

Erfindungsgemäss wird die Aufgabe bei einem Schiebetürensystem gemäss Oberbegriff von Anspruch 1 dadurch gelöst, dass der Wagen eine Rollen- oder Kugelumlaufführung aufweist resp. die obere Führung durch einen Laufwagen mit einer Rollen- oder Kugelumlaufführung und der Führungsschiene realisiert ist. Solche Rollen- oder Kugelumlaufführungen zeichnen sich aus durch eine hohe multi-axiale Belastbarkeit, hohe Präzision und damit Spielfreiheit. Insbesondere kann der Laufwagen durch die Rollen- oder Kugelumlaufführung in allen Richtungen ausser der Schieberichtung im Wesentlichen spielfrei fixiert sein. Es hat sich in Versuchen gezeigt, dass ein Schiebetürensystem mit einer Rollen- oder Kugelumlaufführung den häufig auftretenden Druckschwankungen viel besser standhalten kann als die herkömmlichen Schiebetürensysteme mit einfachen Rollenführungen. Rollen- oder Kugelumlaufführungen zeichnen sich ausserdem durch eine hohe Tragfähigkeit aus und eignen sich daher optimal als im Wesentlichen spielfreie Führung für eine in Strassen- und Eisenbahntunnelsystemen eingesetzte Sicherheitsschiebetüre. Solche Schiebetüren sind aus Stahlblech hergestellt und entsprechend schwer. Ein Türflügel von ca. 6 m² Fläche kann ein Gewicht von 500 Kg und mehr aufweisen.

Gemäss einer bevorzugten Ausführungsform ist zwischen dem Türflügel und dem Wagen eine Gelenkverbindung mit einer zur Führungsschiene parallel verlaufenden Drehachse vorgesehen. Das Vorsehen einer Gelenkverbindung zwischen dem Türflügel und der Rollen- oder Kugelumlaufführungen hat den Vorteil, dass auf den Wagen bei wechselnden Drucklasten kein Drehmoment ausgeübt wird, was die Rollen- oder Kugelumlaufführungen zusätzlich beanspruchen würde. Entsprechend sorgt die Gelenkverbindung für eine grössere Haltbarkeit und längere Serviceintervalle des Schiebetürensystems.

Als obere Führung ist eine Linearführung mit zwei, drei oder mehr Laufwagen zweckdienlich, wobei in der Regel zwei Laufwagen für einen zwei bis drei Meter breiten Schiebetürflügel ausreichend sind. Vorteilhaft hat die Linearführung vier Laufbahnen, z.B. in der O-Typ oder X-Typ-Anordnung. Durch die O-Anordnung ist eine hohe Torsionssteifigkeit gegeben. Auch kann der Wagen mit der Führungsschiene in allen Richtungen - ausser der Schieberichtung - spielfrei verbunden sein. Linearführungen gibt es mit Wagen in unterschiedlichen Vorspannklassen. Vorliegend sind vorzugsweise Wagen der Vorspannklasse V0 (max. 4 µm Spiel) oder höher, besonders bevorzugt der Vorspannklasse V1 (0,05C; C = dynamische Tragzahl) eingesetzt. Im Weiteren sind Linearführungen mit einem Kugelkettenführungswagensystem bevorzugt. Bei diesem System vermeidet die Kette (Käfig) den direkten, punktförmigen, gegenseitigen Kontakt der Kugeln zueinander.

Linearführungen werden mit verschiedenen Vorspannklassen angeboten. Eine Vorspannung verbessert die Steifigkeit, die Präzision und Verwindungssteifigkeit der Linearführung.

Vorteilhaft ist der Türflügel an der oberen Führung im Wesentlichen spielfrei aufgehängt und von dieser getragen. Die Aufhängung des Türflügels an der oberen Schiene hat den Vorteil einer geringeren Störungsanfälligkeit, weil die obere Führung viel weniger verschmutzungsanfällig ist als die untere Führung. Zweckmässigerweise ist die untere Führung in vertikaler Richtung als Loslager ausgebildet. In horizontaler Richtung ist zwischen den Führungsmitteln und dem Türflügel vorzugsweise ein geringes Spiel vorhanden, damit der Türflügel leichtgängig ist. Allerdings ist der Türflügel im geschlossenen Zustand vorzugsweise mit dem Türrahmen resp. mit den oberen und unteren Führungen spielfrei verbunden, um senkrecht auf das Türflügelblatt wirkende Kräfte aufzunehmen. Das heisst, dass der Türflügel im geschlossenen Zustand quer zur Schieberichtung resp. senkrecht zum Türflügelblatt formschlüssig fixiert ist. Die spielfreie Verbindung kann beispielsweise dadurch realisiert sein, dass der Türflügel im geschlossenen Zustand mit dem Türrahmen resp. einer unteren Führung formschlüssig verbunden ist. Dies kann beispielsweise durch Keile oder einen konischen Dorn erfolgen, die im geschlossenen Zustand in entsprechende Gegenstücke im Türrahmen resp. Seitenteil der Türflügelumrandung aufgenommen sind. Vorzugsweise sind bodenseitig in der Geschlossenstellung des Türflügels mindestens zwei in Abstand voneinander angeordnete Formschlussverbindungen realisiert, wobei der Formschluss in allen Richtungen ausser der Schieberichtung wirkt.

Vorteilhaft ist die Gelenkverbindung durch eine am Wagen angeordnete Welle und zwei Aufnahmeplatten, die mit dem Türflügel verbunden sind, umgesetzt. Dies ist eine einfache und robuste Lösung, die es erlaubt, auch sehr schwere Türen an der Führungsschiene gelenkig aufzuhängen.

Zweckmässigerweise ist die Schiebetüre als Sicherheitsschiebetüre ausgeführt. Eine Sicherheitsschiebetüre ist dadurch charakterisiert, dass sie für statische Lasten bis 20 kPa, für wechselnde dynamische Lasten bis 10 kPa und 1 Million bis 10 Millionen Lastwechsel ausgelegt ist. Des Weiteren kann eine solche Sicherheitsschiebetüre einen Brandwiderstand von 30 bis 240 Minuten nach der Prüfnorm EN 1363 bzw. EN 1634 und eine Rauch- und Dichtheitsanforderung nach EN 1634 enthalten. Entsprechend kann die Sicherheitsschiebetüre in Fluchtwegen eingesetzt werden.

Gemäss einer bevorzugten Ausführungsform ist ein Türrahmen vorgesehen, wobei im geschlossenen Zustand die Türe mit dem Türrahmen im Wesentlichen spielfrei verbunden ist. Diese spielfreie Verbindung ist einerseits durch die spielfreie Kugel- oder Rollenumlaufführung im Bereich der oberen Führungsschiene und durch einen Formschluss, z.B. Verkeilung, des Türflügels in der geschlossenen Endposition im Bereich der unteren Führungsschiene realisiert. Die Verkeilung kann durch einen Keil und einem entsprechenden Gegenstück erfolgen, wobei der Keil am Türrahmen und das Gegenstück am Türflügel angeordnet sein kann, oder umgekehrt. Zweckmässigerweise sind an einander gegenüberliegenden Seiten des Türflügels jeweils ein Keil/Gegenstück-Paar vorgesehen. Eine modifizierte Ausführungsform sieht vor, dass am Türflügel mindestens ein in Schieberichtung orientierter Dorn vorgesehen ist, der in der geschlossenen Endposition des Türflügels in einer entsprechend komplementär ausgebildete Dornaufnahme augenommen ist. Eine vorteilhafte Ausführungsform sieht vor, dass in Schieberichtung gesehen vorne und hinten am Türflügel jeweils eine Formschlussverbindung vorgesehen ist, mit welcher der Türflügel in der Geschlossenstellung quer zum Türflügelblatt im Wesentlichen spielfrei festgestellt werden kann.

Vorteilhaft weist der Türflügel ein vorderes und ein hinteres Türblatt auf, wobei die beiden Türblätter voneinander beabstandet und der dazwischenliegende Raum mit einem nicht brennbaren Dämmmaterial gefüllt ist.

Eine Ausführungsform sieht vor, dass eine lösbare Verriegelung für den Türflügel vorgesehen ist, die in der Endstellung des Türflügels selbsttätig einschnappt. Zum manuellen Öffnen ist am Türflügel ein verschwenkbarer Türbügel vorhanden, mit dem sich die Verriegelung öffnen lässt.

Vorteilhaft wird das erfindungsgemässe Schiebetürensystem zum Verschliessen einer Öffnung zwischen einem Haupt- und einem angrenzenden Fluchttunnel verwendet. Dabei kann zum Betätigen des Türflügels ein Motorantrieb vorgesehen sein, wobei ein solcher bei kleineren Schiebetüren auch weggelassen werden kann.

Ein Ausführungsbeispiel der Erfindung wird nun unter Bezugnahme auf die nachfolgenden Figuren näher im Detail beschrieben. Es zeigt:
- Figur 1:: Eine perspektivische Ansicht des erfindungsgemässen Sicherheitsschiebetürensystems mit einem Türflügel, der durch eine obere und eine untere Führungsschiene geführt ist, von schräg unten;
- Figur 2:: Eine Vorderansicht des Sicherheitsschiebetürensystems von Fig. 1;
- Figur 3:: Eine Vorderansicht der oberen Führungsschiene von Fig. 1;
- Figur 4:: Eine Draufsicht der oberen Führungsschiene von Figur 1;
- Figur 5:: Eine perspektivische Ansicht des Sicherheitsschiebetürensystems und der oberen Führungsschiene von Fig. 1;
- Figur 6:: Eine Seitenansicht des Sicherheitsschiebetürensystems und der oberen Führungsschiene von Fig. 1;
- Figur 7:: Ein Schnitt durch eine Seitenansicht des Sicherheitsschiebetürensystems und der oberen Führungsschiene von Fig. 1;
- Figur 8:: Ein Schnitt durch eine Vorderansicht der oberen Führungsschiene von Fig. 1;
- Figur 9:: Eine perspektivische Ansicht des Sicherheitsschiebetürensystems von Fig. 1 mit der Gelenkverbindung in Explosionsdarstellung;
- Figur 10:: Eine perspektivische Ansicht der Gelenkverbindung von Fig. 9 in Explosionsdarstellung;
- Figur 11:: Einen Schnitt durch eine Linearführung mit vier Laufbahnen (O-Typ-Anordnung);
- Figur 12:: Den unteren Abschnitt des Türflügels und der unteren Führung
a) in einem vertikalen Längsschnitt und
b) in der Seitenansicht
c) in einem horizontalen Längsschnitt entlang der Linie H-H der Seitenansicht b);
- Figur 13:: In vergrössertem Massstab die hintere Vorrichtung für die bodenseitige, seitliche Fixierung des Türflügels quer zur Verschieberichtung in der Geschlossenposition;
- Figur 14:: In vergrössertem Massstab die vordere Vorrichtung für die bodenseitige, seitliche Fixierung des Türflügels quer zur Verschieberichtung in der Geschlossenposition; und
- Figur 15:: Die vordere Vorrichtung gemäss Fig. 14 in der Seitenansicht.

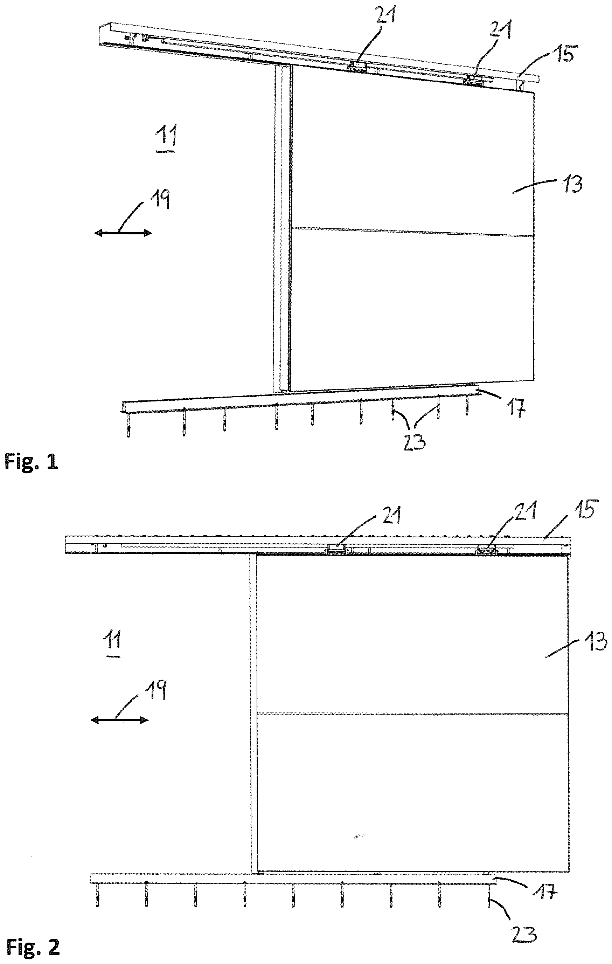

Die Figuren 1 und 2 zeigen ein Ausführungsbeispiel eines erfindungsgemässen Schiebetürensystems 11. Dieses Schiebetürensystem 11 umfasst einen Türflügel 13, der durch eine obere 15 und eine untere Führung 17 geführt und in einer Bewegungsrichtung (Pfeil 19) verschiebbar ist. An der oberen Führung 15 sind Wagen 21 angebracht, die entlang der Führung 13 verschiebbar sind. An den Wagen 21 ist der Türflügel 13 angeordnet, wobei das Gewicht des Türflügels 13 praktisch vollständig d.h. zu mehr als 80% und besonders bevorzugt zu mehr als 90%, von der oberen Führung 15 getragen ist. Die untere Führung 17 dient der Führung des unteren Endes des Türflügels 13, wobei ein nicht näher gezeigter Führungsabschnitt des Türflügels oder am Türflügel angeordnete Rollen in einem nicht näher gezeigten Führungsprofil mit etwas Spiel geführt sind. Sowohl an der oberen 15 als auch an der unteren Führung 17 sind Verankerungsbolzen 23 angeordnet, mit Hilfe derer die Führungen 15,17 in der Wand oder im Boden befestigbar sind. Dazu werden Löcher in die Wand oder den Boden gebohrt, in denen die Verankerungsbolzen verankert werden. Denkbar ist, dass die Verankerungsbolzen 23 oder eine mit den Verankerungsbolzen zusammenwirkende Verankerungshülse (in den Figuren nicht gezeigt) einbetoniert werden. Sind die Verankerungsbolzen 23 in einem Bohrloch aufgenommen, kann anstelle einer Dübelverbindung auch eine Klebeverbindung hergestellt sein.

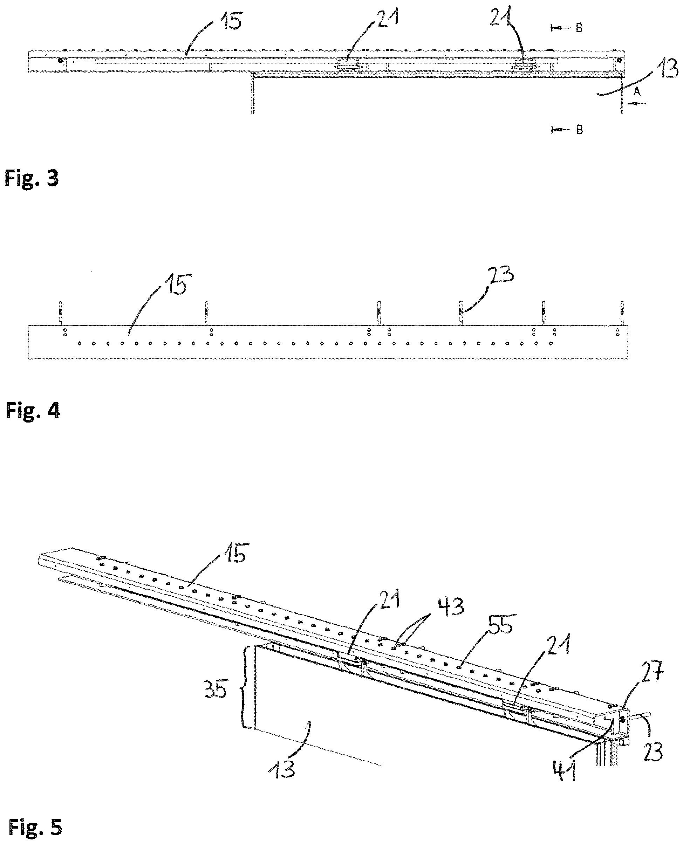

In den Figuren 3 bis 5 ist die obere Führung 13 näher im Detail dargestellt, wobei Figur 4 eine Draufsicht auf die obere Führung und Figur 5 eine perspektivische Teilansicht des Schiebetürensystems zeigen.

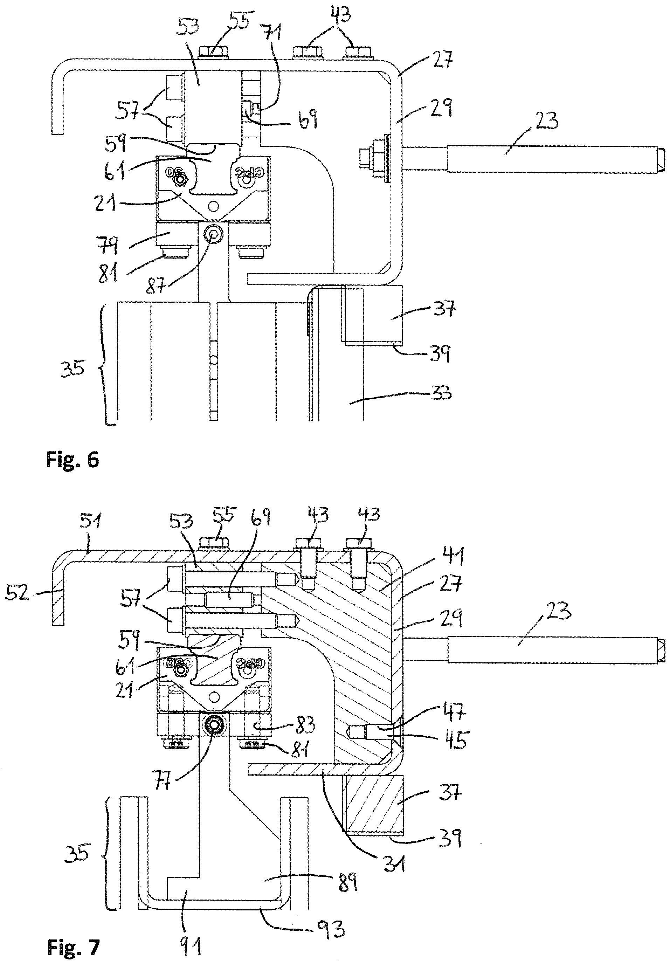

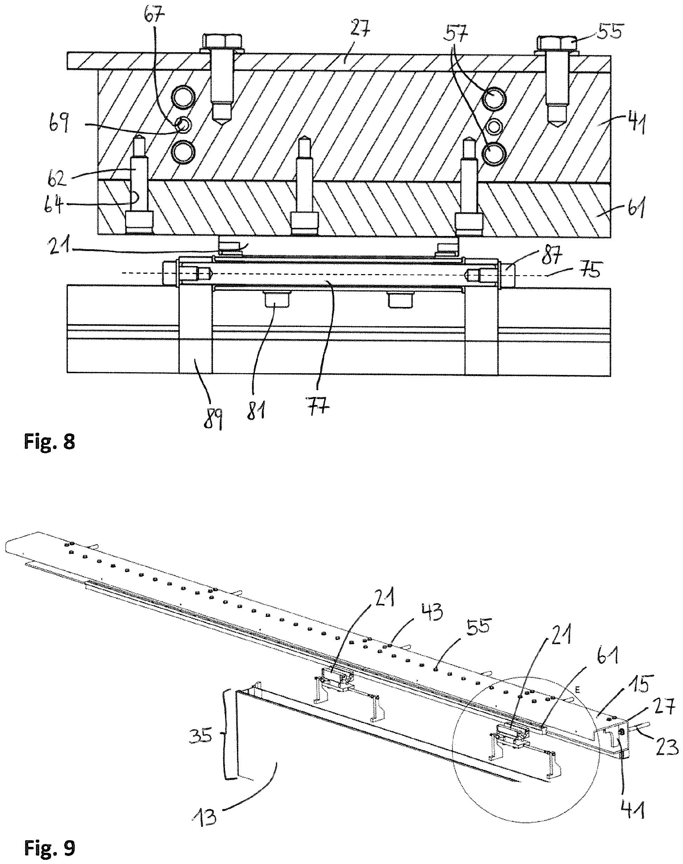

Die Figuren 6 bis 10 zeigen die neuartige Aufhängung 25 des Türflügelsystems 11, wobei Figur 6 eine Stirnansicht (Ansicht A in Fig. 3), Figur 7 einen Schnitt entlang der Linie BB von Fig. 3 und Figur 9 einen Längsschnitt an der Stelle D von Figur 8 zeigt. Die Aufhängung 25 umfasst ein J-förmiges Montageprofil 27 mit einem Basisabschnitt 29, der im montierten Zustand an der Wand oberhalb eines Durchgangs anliegt. Am Basisabschnitt 29 sind in vorzugsweise regelmässigen Abständen die Ankerbolzen 23 angeordnet, wobei diese in den Basisabschnitt 29 eingeschraubt oder an diesem angeschweisst sein können.

Das Montageprofil 27 weist einen kurzen Schenkel 31 und einen langen Schenkel 51 auf. Beide Schenkel 31, 51 erstrecken sich ungefähr rechtwinklig zum Basisprofil 29. Unter dem kurzen Schenkel 31 ist eine Wärmedämmplatte 37, vorzugsweise aus Calciumsilikat, angeordnet. An der Unterseite der Wärmedämmplatte 37 ist eine Brandschutzstreifen 39 vorgesehen, der im Brandfall aufschäumt und abdichtet. Es ist grundsätzlich jedoch auch ein anderer Aufbau denkbar.

Das J-förmige Montageprofil 27 bildet eine Aufnahme für Montageblöcke 41, die in regelmässigen Abständen am Montageprofil 27 angeordnet sind. Die Montageblöcke 41 sind mittels Schrauben 43 und 45, die in entsprechende Schraubenlöcher 47 und 49 eingeschraubt sind, am Montageprofil 27 lösbar befestigt.

Am Schenkel 51 des Montageprofils und im Abstand zum Montageblock 41 ist ein Zwischenstück 53 vorgesehen, das mittels Schrauben 55 und 57 am Schenkel 51 und dem Montageblock 41 befestigt ist. Weiter ist am langen Schenkel 51 des Montageprofils 27 ein Fortsatz 52 ausgebildet, der parallel zum Basisabschnitt 29 im Abstand zum Zwischenstück 53 vorgesehen ist. An der Unterseite 59 des Zwischenstücks 53 ist eine Führungsschiene 61 angeordnet, die mit den Wagen 21 zusammenwirken kann. Die Führungsschiene 61 hat zwei gegeneinander orientierte Führungsnuten 63, in welche die Wagen 21 mit entsprechenden, gewölbten und gegeneinander orientierten Führungsflächen 65 eingreifen, sodass der Wagen 21 die Führungsschiene 61 in formschlüssigen Eingriff nimmt. Zwischen den Führungsnuten 63 und den Führungsflächen 65 sind nicht näher dargestellte Kugelumlaufführungen realisiert, die für eine stabile und vorzugsweise spielfreie Führung der Wagen 17 sorgen.

Im Zwischenstück 53 zwischen den Schrauben 45 ist eine Bohrung 67 vorgesehen, in die ein Justierbolzen 69 eingeschraubt ist. Der Justierbolzen 69 liegt mit dem vorderen Ende an der Stirnseite 71 des Montageblocks 41 an. Er dient der exakten Ausrichtung des Zwischenstücks 53 und der mit dem Zwischenstück 53 verbundenen Führungsschiene 61.

Der Türflügel 13 ist vorzugsweise über eine Gelenkverbindung 73 mit einer zur Längserstreckung der Führungsschiene parallelen Drehachse 75 mit dem Wagen 21 verbunden. Dies hat den Vorteil, dass der Türflügel 13 bei wechselnden Drucklasten nachgeben kann und kein zusätzliches Drehmoment auf die Führungsmittel einwirkt, wenn der Türflügel bei der Vorbeifahrt eines Zuges flattert. Diese Druckwechsel würden ansonsten zu einem raschen Verschleiss und damit Fehlfunktion des Schiebetürensystems führen.

Die Gelenkverbindung 73 ist gemäss dem gezeigten Ausführungsbeispiel gebildet durch eine Welle 77, die in einer Befestigungsplatte 79 aufgenommen ist und die mit Lagerbüchsen 85 in der Befestigungsplatte 79 gelagert ist. Jeweils an den Enden der Welle 77 sind Halteschuhe 89 vorgesehen. Die Halteschuhe 89 sind in einem U-Profil 93 im Türflügel 13 aufgenommen und durch nicht näher gezeigte Befestigungsmittel, z.B. Schrauben, festgeschraubt. Zusätzlich werden die Halteschuhe 89 mit dem an der Unterseite des Halteschuhs 89 vorgesehenen Fusses 91 im Türflügel 13 verankert.

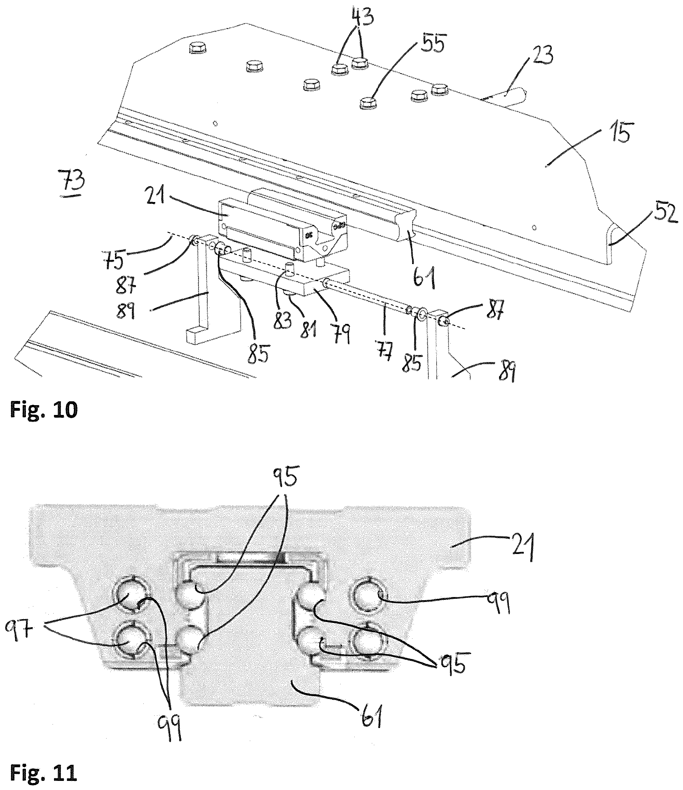

In Fig. 8 ist die Gelenkverbindung 73 gezeigt. Es sind Schrauben 57 erkennbar, mit denen das Zwischenstück 53 an den Montageblock 41 geschraubt ist. Des Weiteren ist die Schiene 61 mit den Schrauben 62, welche in die Schraubenlöcher 64 eingeschraubt sind, lösbar an den Montageblöcken 41 befestigt. Ebenso ist die Bohrung 67 und der Justierbolzen 69 dargestellt. Mittels Schrauben 81, die in Schraubenlöcher 83 eingeschraubt sind, ist die Befestigungsplatte 79, in welcher die Welle 77 aufgenommen ist, mit dem Wagen 21 verschraubt (siehe Fig. 10). An den jeweiligen Enden der Welle 77 sind Lagerbüchsen 85 vorgesehen, an welchen wiederum die Halteschuhe 89 angebracht sind. Schrauben 87 dienen zur Fixierung der Halteschuhe 89 an den Lagerbüchsen 85 bzw. der Welle 77.

Figur 11 zeigt einen Schnitt durch eine Linearführung mit Kugelumlaufführung bestehend aus der Führungsschiene 61 und dem Wagen 21. Für die Lagerung des entlang der Führungsschiene 61 beweglichen Wagens 21 sind vier Laufbahnen 95 (O-Typ-Anordnung) für Kugelanordnungen vorgesehen. Die einzelnen Kugeln 97 der Kugelanordnungen können in Kanälen 99 frei zirkulieren. Solche Linearführungen sind kommerziell auf dem Markt erhältlich.

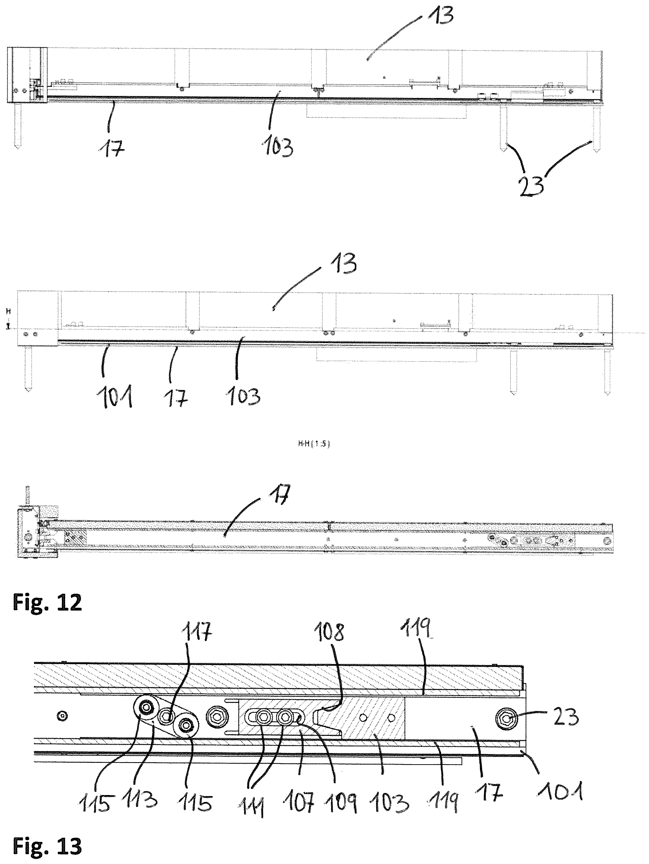

In Fig. 12 ist der untere Randbereich des Türflügels 13 zusammen mit der unteren Führung 17 gezeigt. Die Führung 17 umfasst ein längliches Flachstahlband 101, auf dem Führungs- und Positionierungsmittel angeordnet sind, wie sie nachfolgend im Detail beschrieben sind.

Den bodenseitigen Abschluss des Türflügels 13 bildet ein U-Profil 103, in welchem in Verschieberichtung gesehen hinten ein Keil 105 aufgenommen ist. Dieser Keil 105 wirkt in der Geschlossenstellung des Türflügels mit einem Gegenstück 107 zusammen, das auf dem Flachstahlband 101 montiert ist. Das Gegenstück 107 hat eine keilförmige resp. V-förmige Ausnehmung 108, die formschlüssig mit dem Keil 105 zusammenwirken kann. Im Gegenstück 107 ist zur Justierung ein Langloch 109 vorgesehen, das der Aufnahme von zwei Befestigungsschrauben 111 dient. Das Gegenstück 107 ist in Verschieberichtung so auf dem Flachstahlband 101 positioniert, dass der Keil 105 in der Geschlossenposition des Türflügels in der keilförmigen Ausnehmung 108 im Wesentlichen spielfrei aufgenommen ist.

Zur seitlichen Führung des Türflügels sind auf der Führungsschiene 101 an gegenüberliegenden Enden eines Montageteils 113 zwei Rollen 115 frei drehbar angeordnet. Das Montageteil 113 ist mit einer Befestigungsschraube 117 am Flachstahlband 101 festgeschraubt und so eingestellt, dass die Rollen 115 nur ein geringes Spiel zu den Seitenschenkeln 119 des U-Profils 103 haben, damit der Türflügel leichtgängig ist. Denkbar ist jedoch auch, die Rollen 115 gegen die Seitenschenkel 119 des U-Profils vorzuspannen. Auch können mehrere Führungsrollenpaare vorgesehen sein. Die horizontale Anordnung der Führungsrollen 115 hat den Vorteil, dass diese weit weniger verschmutungsanfällig sind als wenn sie vertikal angeordnet wären.

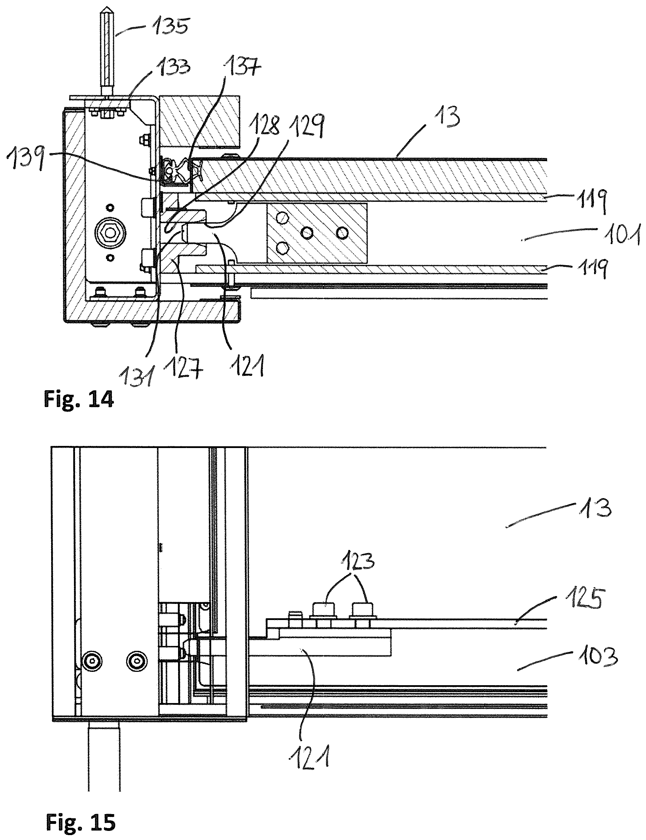

Die Figuren 14 und 15 illustrieren die vordere Vorrichtung zur Feststellung des Türflügels quer zur Verschieberichtung. Diese Vorrichtung umfasst einen Dorn 121, der mittels zweier Schrauben 123 an der Basis 125 des U-Profils 103 befestigt ist. Der Dorn 121 wirkt in der Geschlossenstellung des Türflügels 13 formschlüssig mit einem Gegenstück 127 zusammen, das eine Aufnahme 128 für den Dorn 121 zur Verfügung stellt. Damit der Dorn beim Schliessen des Türflügels ohne grossen Reibwiderstand in die Aufnahme 128 gleiten kann, hat die Aufnahme hat eine konusförmige Öffnung 129, und die Spitze 131 des Dorns 121 ist ebenfalls als Konus ausgebildet. Dorn 121 und Dornaufnahme 128 sind passgenau ausgebildet, sodass nur eine sehr geringes Spiel zwischen diesen besteht. Unter geringem Spiel soll ein solches von weniger als 1 mm, vorzugsweise weniger als 0.5 mm und besonders bevorzugt von weniger als 0.2 mm gelten.

Das Gegenstück 127 ist an einem U-Profil 133 angeordnet, das mit Schrauben 135 seitlich des mit dem Türflügel zu verschliessenden Tunneldurchgangs an der Betonmauer befestigt wird. Von Bedeutung ist, dass die Sicherheitsschiebetüre den Durchgang die Maueröffnung im Wesentlichen spaltfrei verschliesst. Zu diesem Zweck ist zwischen der vorderen Stirnseite 137 des Türflügels und dem Profil 133 ein Dichtungsprofil 139 vorgesehen.

Wird die Schiebetüre in die Geschlossenstellung bewegt, so verriegelt sich diese in der Endstellung vorzugsweise selbsttätig, indem ein vorgespannter, beweglicher Riegel zusammen mit einem am Türflügel vorgesehenen Gegenstück in eine formschlüssige und wieder lösbare Verbindung gebracht werden. Solche Verriegelungen sind dem Fachmann allgemein bekannt und brauchen daher an dieser Stelle nicht näher erläutert werden. Zum Öffnen der Türe kann der vorgespannte Riegel z.B. mit einem Drehgriff zurückbewegt und aus dem Eingriff des Gegenstücks gebracht werden.

Das erfindungsgemässe Schiebetürensystem wird vorzugsweise zum Verschliessen von Öffnungen eingesetzt, auf die wechselnde und senkrecht auf das Türblatt stehende Kräfte einwirken. Ein möglicher Einsatz des Schiebetürensystems ist in Eisenbahntunneln. Fährt ein Zug durch einen Eisenbahntunnel, dann wird die in dem Tunnel befindliche Luft vor und um den Zug verdichtet und es entsteht eine Druckwelle, die umso grösser ist, je schneller der Zug fährt. Passiert ein Zug einen mit einer Türe verschlossenen Notausgang, dann wird das Türblatt mit u.a. orthogonal auf diese wirkenden Kraftkomponenten beaufschlagt. Weil die Kugelumlaufführung grosse Kräfte aufnehmen kann, kann das erfindungsgemässe Schiebetürensystem die wechselnden Drucklasten gut absorbieren. Sind die wirkenden Kräfte besonders gross, leitet die vorgeschlagene Gelenkverbindung die orthogonal auf den Türflügel einfallenden Kraftkomponentennicht direkt auf die Kugel- oder Rollenumlaufführung weiter, sodass diese durch die bei vorbeifahrenden Zügen wechselnden Drucklasten weit weniger belastet wird. Auf die Wagen und die Führungsschiene wirken lediglich die Kraftkomponenten, die parallel in Richtung der Längsachse der Schiene zeigen. Diese Kräfte tragen nicht zu einem Verbiegen der Schienen und einem dadurch verursachten Verklemmen des Türflügels bei. Folglich kann die Lebensdauer und die Serviceintervalle eines solchen Schiebetürensystems massiv verlängert werden.

### Legende

- 11: Schiebetürensystem
- 13: Türflügel
- 15: obere Führung
- 17: untere Führung
- 19: Bewegungsrichtung des Türflügels
- 21: Wagen
- 23: Verankerungsbolzen
- 25: Aufhängung
- 27: Montageprofil
- 29: Basisabschnitt
- 31: kurzer Schenkel des Montageprofils
- 33: Dichtungsblech des Türflügels hinten
- 35: oberer Randabschnitt des Türflügels
- 37: Wärmedämmplatte
- 39: Brandschutzstreifen
- 41: Montageblock
- 43: Schrauben
- 45: Schrauben
- 47: Schraubenlöcher für Schrauben 43
- 49: Schraubenlöcher für Schrauben 45
- 51: Langer Schenkel des Montageprofils
- 52: Fortsatz
- 53: Zwischenstück
- 55: Schrauben
- 57: Schrauben
- 59: Unterseite des Zwischenstücks
- 61: Obere Führungsschiene
- 62: Schrauben
- 63: Führungsnuten
- 64: Schraubenlöcher für Schrauben 62
- 65: Führungsflächen
- 67: Bohrung
- 69: Justierbolzen
- 71: Stirnseite des Montageblocks
- 73: Gelenkverbindung
- 75: Drehachse der Gelenkverbindung
- 77: Welle
- 79: Befestigungsplatte
- 81: Schrauben
- 83: Schraubenlöcher für Schrauben 81
- 85: Lagerbüchse
- 87: Schrauben
- 89: Aufnahmeplatten/ Halteschuh
- 91: Fuss
- 93: U-Profil
- 95: Laufbahnen
- 97: Kugeln
- 99: Kugelkanäle im Wagen 21
- 101: Flachstahlband
- 103: U-Profil
- 105: Keil
- 107: Gegenstück
- 108: keilförmige Ausnehmung
- 109: Langloch
- 111: Befestigungsschrauben
- 113: Montageteil
- 115: Rollen
- 117: Befestigungsschrauben
- 119: Seitenschenkel des U-Profils
- 121: Dorn
- 123: Schrauben
- 125: Basis des U-Profils
- 127: Gegenstück
- 129: konusförmige Öffnung
- 131: Konusförmige Spitze des Dorns
- 133: U-Profil
- 135: Schrauben
- 137: Vordere Stirnseite des Türflügels
- 139: Dichtungprofil
- 141:

## Patentansprüche

1. Schiebetürensystem (11) für Strassen- und Eisenbahntunnel, mit
- einer oberen (15) und
- einer unteren Führung (17) für einen Türflügel (13),
- wobei die obere Führung (15) eine Führungsschiene (61) und wenigstens einen entlang der Führungsschiene (61) verschiebbaren Wagen (21) aufweist, und
- einem am Wagen (21) angeordneten Türflügel (13),
**dadurch gekennzeichnet, dass**
- zwischen dem Wagen (21) und der Führungsschiene (61) eine Rollen- oder Kugelumlaufführung vorgesehen ist.

2. Schiebetürensystem (11) nach Anspruch 1, **dadurch gekennzeichnet, dass** zwischen dem Türflügel (13) und dem Wagen (21) eine Gelenkverbindung (73) mit einer zur Führungsschiene (61) parallel verlaufenden Drehachse (75) vorgesehen ist.

3. Schiebetürensystem (11) nach Anspruch 1 oder 2, **dadurch gekennzeichnet, dass** der Wagen im Wesentlichen spielfrei an der Führungsschiene geführt ist.

4. Schiebetürensystem (11) nach einem der Ansprüche 1 bis 3, **dadurch gekennzeichnet, dass** die Rollen- oder Kugelumlaufführung vorgespannt ist.

5. Schiebetürensystem (11) nach einem der Ansprüche 1 bis 4, **dadurch gekennzeichnet, dass** mindestens zwei in Abstand voneinander angeordnete Wagen eingesetzt sind.

6. Schiebetürensystem (11) nach einem der Ansprüche 1 bis 5, **dadurch gekennzeichnet, dass** der Türflügel (13) an der oberen Führungsschiene (61) aufgehängt ist.

7. Schiebetürensystem (11) nach einem der Ansprüche 2 bis 6, **dadurch gekennzeichnet, dass** die Gelenkverbindung (73) durch eine am Wagen angeordnete Welle (77) und zwei Aufnahmeplatten, die mit dem Türflügel verbunden sind, realisiert ist.
Schiebetürensystem nach einem der Ansprüche 1 bis 7, **dadurch gekennzeichnet, dass** die Schiebetüre als Sicherheitsschiebetüre ausgeführt ist.

8. Schiebetürensystem (11) nach einem der Ansprüche 1 bis 7, **dadurch gekennzeichnet, dass** die untere Führung (17) in vertikaler Richtung als Loslager ausgebildet ist.

9. Schiebetürensystem (11) nach einem der Ansprüche 1 bis 9, **dadurch gekennzeichnet, dass** der Türflügel im geschlossenen Zustand mit der oberen und unteren Führung quer zum Türflügelblatt im Wesentlichen spielfrei verbunden ist.

10. Schiebetürensystem (11) nach einem der Ansprübe 1 bis 9, **dadurch gekennzeichnet, dass** der Türflügel im geschlossenen Zustand an unteren Führung quer zur zum Türflügelblatt formschlüssig fixiert ist.

11. Schiebetürensystem (11) nach einem der Ansprübe 1 bis 10, **dadurch gekennzeichnet, dass** vorzugsweise vorne am Türflügel ein in Schieberichtung orientierter Dorn vorgesehen ist, der im geschlossenen Zustand in einem an einem Seitenteil vorgesehenen Gegenstück im Wesentlichen spielfrei aufgenommen ist.

12. Schiebetürensystem (11) nach einem der Ansprübe 1 bis 11, **dadurch gekennzeichnet, dass** zur Realiserung eines zweiten Formschlusses in Schieberichtung gesehen hinten am Türflügel eine zweite Formschlussverbindung vorgesehen ist, die beispielsweise durch einen Keil und ein entspechendes Gegenstück realisiert sein kann.

13. Schiebetürensystem (11) nach einem der Ansprübe 1 bis 12, **dadurch gekennzeichnet, dass** eine lösbare Verriegelung für den Türflügel vorgesehen ist, die in der Endstellung des Türflügels selbsttätig einschnappt.

14. Schiebetürensystem (11) nach einem der Ansprübe 1 bis 13, **dadurch gekennzeichnet, dass** am Türflügel ein verschwenkbarer Türbügel vorhanden ist, mit dem sich die Verriegelung öffnen lässt.

15. Verwendung des Schiebetürensystems (11) nach einem der Ansprüche 1 bis 14 zum Verschliessen einer Öffnung zwischen einem Haupt- und einem angrenzenden Fluchttunnel.
